# EUROPEAN PATENT SPECIFICATION

(11) **EP 1 243 592 B1**
(45) Date of publication and mention of the grant of the patent: **08.06.2005**
(21) Application number: 02004222.2
(22) Date of filing: 26.02.2002
(51) Int. Cl.: C07F 9/58

(54) **A process for the preparation of risedronic acid**
Verfahren zur Herstellung von Risedronsäure
Procédé de préparation de l'acide risédronique

(30) Priority: 19.03.2001 PL 34651701
(43) Date of publication of application: 25.09.2002
(73) Proprietor: Adamed SP. Z O.O., 05-152 Czosnow k/Warszawy (PL)
(72) Inventor: Wieczorek, Maciej, 05-092 Lomianki (PL); Stawinski, Tomasz, 05-462 Wiazowna (PL); Chrulski, Krzysztof, 07-409 Ostroleka (PL)
(74) Representative: Sitkowska, Jadwiga

(56) References cited:
- EP-A- 0 001 584
- EP-A- 0 186 405
- WO-A-93/24498
- KIECZYKOWSKI G R: "Preparation of (4-amino-1-hydroxybutylidene)bisphosphonic acid sodium salt, MK-217 (Alendronate Sodium). An improved procedure for the preparation of 1-hydroxy-1,1-bisphosphonic acids" JOURNAL OF ORGANIC CHEMISTRY, AMERICAN CHEMICAL SOCIETY. EASTON, US, vol. 60, no. 25, 1995, pages 8310-8312, XP002162672 ISSN: 0022-3263

## Description

The present invention relates to a process for the preparation of risedronic acid having chemical name [1-hydroxy-2-(3-pyridyl)-ethylidene]bisphosphonic acid. Risedronic acid is used in medicine for the treatment of diseases related to an impaired calcium and phosphates metabolism, in particular in osteoporosis.

A known process for the preparation of risedronic acid described in Journal of Organic Chemistry, vol. 60, No 25, pp. 8310-8312 (1995) comprises a reaction of 3-pyridylacetic acid with phosphorous acid H₃PO₃ and phosphorus trichloride PCl₃. According to the teaching of the above-cited paper, the major technical problem is the solidification of a reaction mixture into the vitreous solid which makes any agitation virtually impossible, and renders work-up and separation of risedronic acid very difficult. As a consequence, a safe scaling up of the process is impossible. The article mentions also in general of efforts, not described in detail, to conduct the reaction in other more acceptable solvents, such as ethers and inert solvents, such as hexane and chlorobenzene, to provide reaction mixture in a form of a homogeneous solution or dispersion. Said efforts were reported to fail. Thus it was proposed to conduct the reaction in methanesulphonic acid as a solvent, since in this case it was possible to find a range of concentrations in which reaction mixture had a liquid form. The yield obtained was 39%. Although the problem of the solidification of the reaction mixture was solved, the major problem of above process is rather low yield, as well as a toxicity and aggressiveness of methanesulphonic acid and risks to the environment. This makes said known process hard to accept in an industrial scale.

The international application WO 93/24498 describes a process for the preparation of risedronic acid which process comprises adding 3-pyridylacetic acid hydrochloride, phosphorous acid and chlorobenzene to a flask, placing the flask in a boiling water bath, adding dropwise phosphorus trichloride. The mixture is stirred for 3 hours at 100°C, and a yellow, gummy oil forms during the course of this reaction. After cooling the reaction mixture and removal of the excess chlorobenzene, the oil is hydrolyzed in 1 N HCl overnight, cooled, and the first crop of crystals is filtered and washed with ethanol. The filtrate is evaporated to an oil, and a small amount of water is added to dissolve the oil. Ethanol is added to induce crystallization. The second crop of crystals is filtered and washed with ethanol and combined with the first crop. The combined crops were recrystallized from hot water.

The European Patent No EP 0186405 describes the preparation of the risedronic acid analogue, 2-(2-pyridyl)-1-hydroxyethane-1,1-diphosphonic acid, by reacting 2-pyridylacetic acid with phosphorous acid and phosphorus trichloride in chlorobenzene on a boiling water bath, with the yield of 52%. However, no technical data concerning the manufacture of risedronic acid were provided. Disclosed process of 1-hydroxy-2-(2-pyridyl)ethane-1,1-diphosphonic acid separation comprised cooling the final reaction mixture on an ice bath, decanting the chlorobenzene solution from solidified product, followed by warming the solidified product for several hours in a boiling water bath, filtering through celite and precipitating with methanol. After cooling, the precipitated solid was filtered and washed several times with various solvents and dried. Above operations are too complicated to be carried out in a large scale, require multiple temperature changes of the reaction mixture (in the range of the order of 100°C), and do not provide the final product of the suitable purity.

A serious problem with the manufacture of risedronic acid by the above-described reaction is also relatively low temperature tolerance of the reaction, which makes controlling the reaction mixture temperature difficult.

Since the risedronic acid is used in medicine, the other key issue besides the process yield is the purity of the obtained material, as well as the simplicity of its isolation and purification from the final reaction mixture.

The object of the present invention is to provide a process for the preparation of risedronic acid giving the pure product with high yield, with the maximum possible simplification of work-up and purification operations.

The object of the invention is also to provide an one-pot process for the preparation of pure risedronic acid, to be conducted in a single reaction vessel.

The above problems are solved with a process according to claim 1.

According to the invention, the process comprises the reaction of 3-pyridylacetic acid with phosphorous acid (H₃PO₃) and phosphorus trichloride (PCl₃) in chlorobenzene at the temperature in the range of 85-100°C, preferably 90-100°C, or in fluorobenzene at the reflux temperature of the reaction mixture, followed by removal of the solvent and isolation of pure risedronic acid, wherein

the pure risedronic acid is isolated by treating raw risedronic acid, preferably without its separation from the final reaction mixture, with the alkali metal or ammonium hydroxide, bicarbonate, or carbonate, followed by treating thus obtained alkali metal or ammonium salt of risedronic acid with a strong mineral acid.

Preferably, for the preparation of risedronic acid salt, alkali metal hydroxide, in particular sodium hydroxide, is used.

For the conversion of risedronic acid salt into free risedronic acid concentrated hydrochloric acid as a strong mineral acid is preferably used.

Preferably 3-pyridylacetic acid is used as a readily commercially available hydrochloride salt.

The reaction is conducted at the molar ratio of reagents 1 to 4,5 moles, preferably 3 moles, of phosphorous acid and 1 to 4,5 moles, preferably 3 moles, of phosphorus trichloride for 1 mole of 3-pyridylacetic acid or its hydrochloride.

Since the purification of the raw risedronic acid can be conducted without its separation from the final reaction mixture, the procedures of product purification are significantly simplified, numerous temperature changes reaching even 100°C are much reduced, thus decreasing the duration and energy consumption of the process. As compared with the process employing the methanesulphonic acid, the reaction is conducted in a shorter period, with the higher yield of the pure product.

In case of conducting the reaction in fluorobenzene, the additional technical effect is the easier control of the temperature of the system, inasmuch as the process is conducted at the reflux temperature of the reaction mixture. This eliminates the necessity of using heating media and controlling their temperature.

The preparation of risedronic acid by the process of the invention can be conducted by charging a reaction vessel with 3-pyridylacetic acid in a commercial hydrochloride form and phosphorous acid in chlorobenzene. The mixture is stirred on a boiling water bath, then phosphorus trichloride is added and whole mixture is stirred on a boiling water bath. After slight cooling, chlorobenzene is decanted off, water is added to the residue and the mixture is heated to boiling under the Dean-Stark trap, to strip the residual chlorobenzene. The solution of sodium hydroxide, bicarbonate or carbonate and after a while the activated carbon is then added while hot, the mixture is boiled for a short time, cooled to about 80°C and filtered while hot. A concentrated mineral acid, especially hydrochloric acid, is added to the filtrate and the filtrate is cooled. The solid product is filtered, washed with ethanol and dried. Resulting pure risedronic acid can be directly converted into its sodium salt of the purity suitable for preparing a pharmaceutical dosage form.

In case of conducting the reaction in fluorobenzene the process is analogous, except that there is no necessity to use heating medium of the controlled temperature, such as a boiling water bath.

### Example 1

To a three-necked flask provided with a reflux condenser protected with calcium chloride tube, a mechanical stirrer and a thermometer 50.0 g (0.288 mole) of 3-pyridylacetic acid hydrochloride, 70.9 g (0.865 moles) of phosphorous acid and 1000 ml chlorobenzene was added. The reaction mixture was heated on a boiling water bath (reaction temperature about 95-98°C) and 119.0 g (0.867 moles, 76 ml) of phosphorus trichloride was added in one portion while stirring. The hydrogen chloride started to evolve, which had to be absorbed in water. The reaction mixture was heated for 2.5 h, during which a thick yellow oil formed. No sudden temperature changes or reaction changes were observed. Then the reaction was cooled and chlorobenzene was decanted from above the solidified product. The reaction flask containing the product was filled with 1300 ml of water and heated with boiling under the Dean-Stark trap for 1-1.5 h, collecting the evolving residual chlorobenzene. NaOH (50.0 g) in water (120.0 ml) was then added while hot and resulting mixture refluxed for 1 h. Activated carbon (0.75 g) was then added, the reaction was boiled for 10-15 minutes, cooled slightly, filtered through celite and the concentrated HCl (40 ml) was added. The white precipitate formed after cooling. The precipitate was filtered off, washed with ethanol and dried at 80°C, to provide 40.1 g (49%) of risedronic acid of the purity suitable for preparing a pharmaceutical dosage form.

### Example 2

To a three-necked flask provided with a reflux condenser protected with calcium chloride tube, a mechanical stirrer and a thermometer 50.0 g (0.288 moles) of 3-pyridylacetic acid hydrochloride, 70.9 g (0.865 moles) of phosphorous acid and 1000 ml fluorobenzene was added. The reaction mixture was heated to boiling (the internal reaction temperature about 90-92°C) and 119.0 g (0.867 moles, 76 ml) of phosphorus trichloride was added in one portion while stirring. The hydrogen chloride started to evolve, which had to be absorbed in water. The reaction mixture was heated for 3 h, during which a thick yellow oil formed. No sudden temperature changes or reaction changes were observed. Then the reaction was cooled and fluorobenzene was decanted from above the solidified product. The reaction flask containing the product was filled with 1300 ml of water and heated with boiling under the Dean-Stark trap for 1-1.5 h, while collecting the evolving residual chlorobenzene. NaOH (50.0 g) in water (120.0 ml) was then added while hot and resulting mixture refluxed for 1 h. Activated carbon (0.75 g) was then added, the reaction was boiled for 10-15 minutes, cooled slightly, filtered through celite and the concentrated HCl (40 ml) was added. The white precipitate formed after cooling. The precipitate was filtered off, washed with ethanol and dried at 80°C, to provide 40-42 g (49-50%) of risedronic acid of the purity suitable for preparing a pharmaceutical dosage form.

## Claims

1. A process for the preparation of risedronic acid by reacting 3-pyridylacetic acid with phosphorous acid and phosphorus trichloride in a solvent, **characterised in that** it comprises reacting 3-pyridylacetic acid with phosphorous acid and phosphorus trichloride in chlorobenzene at the temperature in the range of 85-100°C or in fluorobenzene at the reflux temperature of the reaction mixture, removing the solvent, and isolating pure risedronic acid, wherein said pure risedronic acid is isolated by treating raw risedronic acid, preferably without separating it from the reaction mixture, with alkali metal or ammonium hydroxide, bicarbonate or carbonate, and then treating the resulting alkali metal or ammonium risedronic acid salt with a strong mineral acid.

2. The process of Claim 1, **characterised in that** 3-pyridylacetic acid is used as its hydrochloride salt.

3. The process of Claim 1 or 2, **characterised in that** said raw risedronic acid is treated with alkali metal hydroxide, especially sodium hydroxide.

4. The process of Claims 1-3, **characterised in that** said strong mineral acid is the concentrated hydrochloric acid.

5. The process of claims 1-4, **characterised in that** said alkali metal or ammonium risedronic acid salt is treated with active carbon and filtered over celite, before treating with said mineral acid.

## Patentansprüche

1. Verfahren zur Herstellung von Risedronsäure durch Reaktion von 3-Pyridylessigsäure mit phosphoriger Säure und Phosphor(III)-chlorid in einem Lösungsmittel, **dadurch gekennzeichnet, dass** man Reaktion von 3-Pyridylessigsäure mit phosphoriger Säure und Phosphor(III)-chlorid in Chlorobenzen bei einer Temperatur im Bereich von 85 bis 100°C oder in Fluorobenzen bei Rückflusstemperatur des Reaktionsgemisches, dann die Entfernung des Lösungsmittels und die Isolierung der reiner Risedronsäure durchgeführt,
worin die Isolierung der reiner Risedronsäure durch die Umsetzung der rohen Risedronsäure, vorzugsweise ohne Trennung der Risedronsäure aus dem Reaktionsgemisch, mit Alkalimetal- oder Ammoniumhydroxid, -bicarbonat oder -carbonat, und anschliessend die Umsetzung des erhaltenen Alkalimetal- oder Ammoniumrisedronsäuresalz mit einer starken Mineralsäure durchgeführt wird.

2. Verfahren nach Anspruch 1, **dadurch gekennzeichnet, dass** 3-Pyridylessigsäure als Hydrochlorid Salz eingesetzt wird.

3. Verfahren nach Anspruch 1 oder 2, **dadurch gekennzeichnet, dass** die rohe Risedronsäure mit Alkalimetallhydroxid, besonders Sodiumhydroxid, umgesetzt wird.

4. Verfahren nach einem der Ansprüche 1 bis 3, **dadurch gekennzeichnet, dass** die starke Mineralsäure die konzentrierte Salzsäure ist.

5. Verfahren nach einem der Ansprüche 1 bis 4, **dadurch gekennzeichnet, dass** vor der Umsetzung mit der Mineralsäure, die Alkalimetall- oder Ammoniumrisedronsäuresalz mit Aktivkohle behandelt und über Celite filtriert wird.

## Revendications

1. Procédé de préparation de l'acide risédronique par une réaction de l'acide 3-pyridilacétique avec l'acide phosphoreux et trichlorure de phosphore dans un solvant, **caractérisé en ce qu'**il comprend la réaction de l'acide 3-pyridilacétique avec l'acide phosphoreux et trichlorure de phosphore dans chlorobenzène à une température comprise entre 85 et 100°C ou dans fluorobenzène au refl ux température de la mélange réactionelle, puis l'élimination du solvant et l'isolement de l'acide risédronique pur,
où ledit acide risédronique pur est isolé par le traitement de l'acide risédronique brut, de préférence sans séparer de l'acide risédronique de la mélange réactionelle, avec un hydroxyde, bicarbonate ou carbonate de métal alcalin ou d'ammonium, pour obtenir un risédronate de métal alcalin ou d'ammonium, et puis le risédronate de métal alcalin ou d'ammonium obtenu est traité avec un acide minéral fort.

2. Procédé selon la revendication 1, **caractérisé en ce que** l'acide 3-pyridilacétique est employeé comme chlorhydrate sel.

3. Procédé selon les revendications 1 ou 2, **caractérisé en ce que** l'acide risédronique brut est traité avec la hydroxyde de métal alcalin, particulièrement de sodium.

4. Procédé selon les revendications 1-3, **caractérisé en ce que** l'acide minéral fort est l'acide chlorhydrique concentré.

5. Procédé selon les revendications 1-4, caractérisé en ce q'avant le traitement par l'acide minéral fort le risédronate de métal alcalin ou d'ammonium est traité avec charbon actif et filtré sur le celite.
